Europäisches Patentamt

European Patent Office

Office européen des brevets

(11) Numéro de publication: **0 310 184 B1**

(12) **FASCICULE DE BREVET EUROPEEN**

(19)

(45) Date de publication de fascicule du brevet: **19.05.93**   (51) Int. Cl.⁵: **G02B 6/12**

(21) Numéro de dépôt: **88202084.5**

(22) Date de dépôt: **26.09.88**

(54) **Elément de commutation optique incluant deux guides de lumière parallèles et matrice de commutation constituée de tels éléments.**

(30) Priorité: **02.10.87 FR 8713645**

(43) Date de publication de la demande:
**05.04.89 Bulletin  89/14**

(45) Mention de la délivrance du brevet:
**19.05.93 Bulletin  93/20**

(84) Etats contractants désignés:
**DE FR GB IT NL**

(56) Documents cités:
**EP−A− 0 000 647**
**EP−A− 0 179 507**
**EP−A− 0 209 190**
**EP−A− 0 210 690**
**GB−A− 2 053 555**

**ELECTRONICS LETTERS, vol. 20, no. 19, septembre 1984, pp 790−792, Staines, GB; M. Fujiwara et al.: "Gigahertz−bandwidth InGaAsP/InP optical modulators/switches with double−hetero waveguides".**

(73) Titulaire: **ALCATEL ALSTHOM RECHERCHE Société Anonyme**
**Route de Nozay**
**91460 Marcoussis(FR)**

(72) Inventeur: **Erman, Marko**
**Société Civile S.P.I.D. 156, boulevard Haus−smann**
**F− 75008 Paris(FR)**
Inventeur: **Gamonal Rémi**
**Société Civile S.P.I.D. 156, boulevard Haus−smann**
**F− 75008 Paris(FR)**

(74) Mandataire: **Dalsace, Michel et al**
**c/o Sospi 14− 16, rue de la Baume**
**F− 75008 Paris (FR)**

## Description

L'invention concerne un élément de commutation optique tel que dèfini dans le préambule de la revendication 1.

L'invention concerne en outre une matrice de commutation optique formée d'un nombre n x m de ces éléments de commutation.

L'invention concerne enfin un procédé de réalisation de l'élément de commutation et de la matrice.

L'invention trouve son application dans la commutation de signaux optiques transportés par fibres optiques, par exemple dans le domaine des télécommunications, domaine dans lequel la commutation entre de nombreuses fibres optiques doit être rendue possible pour éviter de devoir convertir les signaux optiques transportés par les fibres en signaux électriques lors de la commutation entre les différents abonnés.

Un élément optique apte à former une matrice de commutation est connu de la publication intitulée : "Double heterostructure GaAs−$Al_xGa_{1-x}As$ Rib Waveguide Directional Coupler Switch" par J. Brandon, A. Carenco and alii dans "Second European Conference on Integrated Optics", 17−18 octobre 1983 à Florence, Italie.

Ce document décrit un élément de commutation formé de deux guides de lumière constitués chacun par un ruban d'arséniure de gallium (GaAs). Ces rubans sont parallèles et réalisés côte à côte en surface d'une couche d'arséniure de gallium et d'aluminium (GaAlAs) qui sert de couche de confinement de la lumière dans les guides vis−à−vis du substrat plan en arséniure de gallium (GaAs). Une autre couche d'arséniure de gallium et d'aluminium (GaAlAs) couvre chacun des rubans formant les guides. Ceux−ci sont d'autre part réalisés en relief sur le substrat par gravure d'une couche de départ. Des électrodes de type Schottky sont enfin réalisées en surface de chacun des guides, tandis que la face opposée du substrat est munie d'une couche formant un contact ohmique.

Les guides transportent chacune une onde monomode et, du fait de la petite distance qui les sépare latéralement, une polarisation appliquée sur l'un ou l'autre des guides permet de changer le couplage des deux guides monomodes, assurant ainsi la commutation souhaitée.

Mais la longueur de couplage, c'est−à−dire la longueur nécessaire pour que la lumière passe d'un guide dans l'autre, dépend d'une part de la distance de couplage, c'est−à−dire la distance qui sépare latéralement les guides et d'autre part de la structure des guides. La structure des guides connue du document cité est du type "ruban externe". Or le couplage entre deux tels guides est faible et donc la longueur de couplage est grande, typiquement 5 à 8 mm.

De telles distances sont beaucoup trop importantes pour s'appliquer à la réalisation de matrices de commutation intégrées. En effet, une matrice va comporter un nombre n de tels éléments de couplage disposés en cascade dans la direction longitudinale des guides, ce qui va conduire à des surfaces rédhibitoires pour l'intégration.

D'autre part, pour réaliser une telle matrice de commutation, il est nécessaire de dévier périodiquement le chemin optique d'une des ondes. Ceci peut être obtenu en réunissant l'un des guides d'un élément à l'un des guides d'un autre élément au moyen d'un tronçon de guide courbe, comme il est montré dans la publication intitulée "New directional coupler for integrated optics" par F. Auracher et H.H. Witte dans "Journal of applied physics", Vol.45, n°11, novembre 1974, pp.4997 à 4999. Mais pour présenter de faibles pertes, le guide courbe doit avoir un grand rayon de courbure, typiquement une dizaine de mm pour maintenir les pertes en deçà de 1db, lors d'un changement de direction de 90˚. La surface occupée par la matrice est d'autant plus importante et moins appropriée à l'intégration.

Ce dernier document cité propose de pallier certains inconvénients d'un tel élément de commutation en réalisation les guides au moyen de couches superposées. Mais il apparaît à l'usage que les masques nécessaires pour l'alignement d'un guide sur l'autre doivent être réalisés avec une précision tellement grande que le rendement de fabrication devient trop faible pour une application rentable aux circuits intégrés. Ce document propose aussi une structure dans laquelle deux guides de lumière sont disposés côte à côte, séparés d'une distance suffisamment grande pour éviter un couplage spontané, et sont couverts d'une couche pour réaliser un troisième guide de lumière formé à cheval sur les deux premiers, séparé de ceux−ci par une couche diélectrique. Ce document enseigne que dans ces conditions le couplage est amélioré. Mais outre l'inconvénient dû à l'alignement des guides superposés cité plus haut, le problème est encore compliqué du fait que cette structure fait intervenir trois guides de lumière. De plus, il n'est pas montré d'autres dispositifs qu'un élément discret, ni enseigné comment réaliser une matrice de commutation complète. Or, le concepteur de circuits sait combien il est difficile de passer de la réalisation d'un élément discret à la réalisation d'un circuit complexe.

Il est connu par la demande de brevet européen EP−A−0 209 190 un élément de commutation optique comportant un substrat en matériau semiconducteur, un guide principal, un premier guide secondaire parallèle au guide principal et à faible distance de celui−ci, de façon à former avec ce dernier un premier dispositif de couplage déclenchable par un premier système d'électrodes, un miroir disposé à 45° par rapport au premier guide secondaire, un second guide secondaire à 90° du premier guide secondaire et relié à celui-ci de façon à recevoir la lumière réfléchie par le miroir, un guide principal transverse, orthogonal par rapport au guide principal et à faible distance du second guide secondaire, de façon à former avec ce dernier un second dispositif de couplage déclenchable par un second système d'électrodes.

Le document GB−A−2 053 555 décrit par ailleurs une matrice de commutation à lignes et à colonnes formée d'éléments de commutation comportant des guides principaux, des guides principaux transverses et des guides secondaires de forme incurvée, couplés avec les guides principaux pour permettre à la lumière de passer des uns aux autres.

Mais la structure décrite dans le document EP−A−0 209 190 est formée de deux guides superposés, structure qu'il est essentiel d'éviter pour les raisons décrites plus haut, et d'autre part la réalisation d'un miroir sur le guide supérieur par le moyen d'une gravure comporte des étapes de masquage très délicates, dans le but d'éviter la gravure du guide inférieur, qui rendent la réalisation de cet ensemble relativement difficile. Par conséquent le rendement de fabrication d'un tel dispositif serait faible.

Or dans le domaine envisagé de l'application aux télécommunications, la demande est pour des circuits électro−optiques toujours plus performants, toujours plus miniaturisés, et toujours moins coûteux, c'est−à−dire d'une réalisation aisée avec un bon rendement de fabrication.

La présente invention permet de résoudre ces problèmes à l'aide d'un élément de commutation tel que défini dans la revendication 1.

L'invention sera mieux comprise au moyen de la description suivante illustrée par les figures annexées dont :

- la figure 1 qui montre schématiquement l'élément de commutation selon l'invention en perspective ;
- la figure 2 qui montre schématiquement vue du dessus une matrice de commutation formée de 4 x 4 éléments de commutation selon l'invention ;
- l'ensemble des figures 3a à 3ℓ qui illustre un procédé de réalisation d'un élément de commutation selon l'invention ;
- l'ensemble des figures 4a à 4f qui illustre un procédé de réalisation d'une variante de l'élément de commutation selon l'invention ;
- l'ensemble des figures 5a et 5b qui illustre un procédé de réalisation de photodétecteurs appliqués aux sorties des guides de la matrice de commutation selon l'invention ;

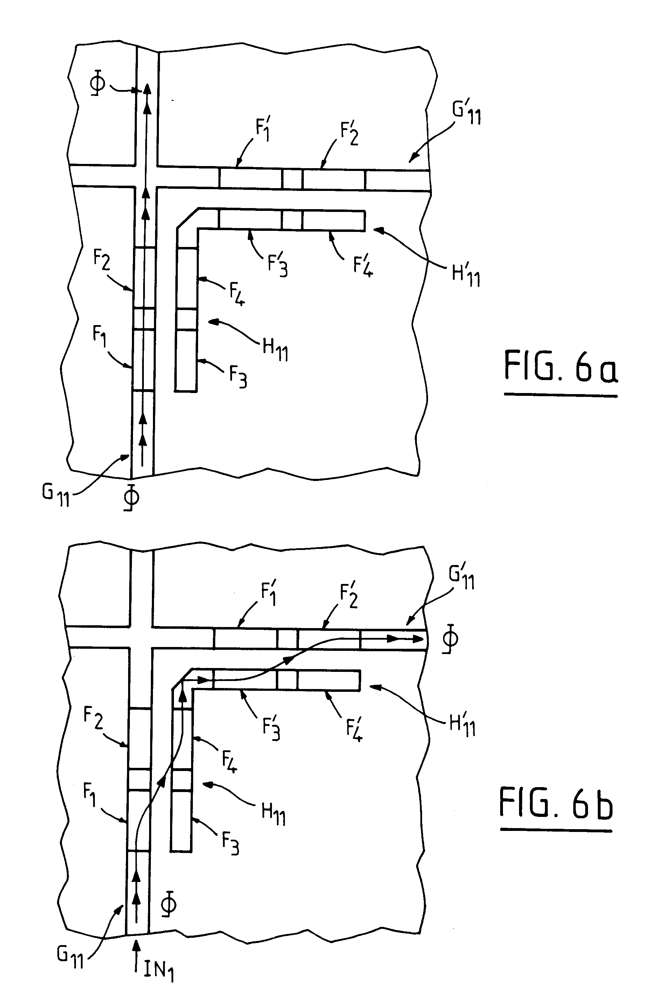

- les figures 6a et 6b qui montrent le trajet des faisceaux dans un élément de commutation selon l'invention.

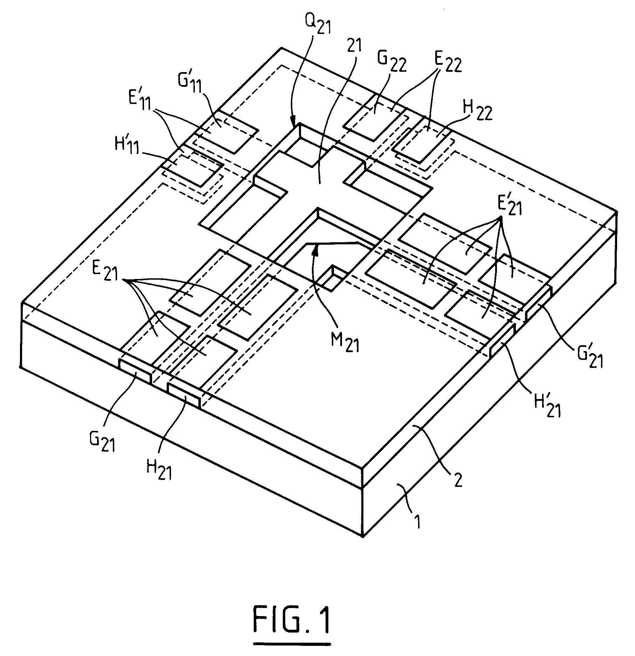

Tel que représenté sur la figure 1, l'élément de commutation selon l'invention comprend, formés sur un substrat monocristallin orienté 1, de faible indice de réfraction $n_o$, deux rubans de matériaux semiconducteurs $G_{21}$ et $H_{21}$ d'indice de réfraction supérieur $n_1 > n_o$.

Ces rubans présentent, sur la figure 1, une section rectangulaire. Ils sont linéaires, et séparés par une distance d dite distance de couplage. Ils sont parallèles sur une distance D parallèle à leur axe optique, dite longueur de couplage.

Ces rubans sont noyés dans une couche 2 de faible indice $n_2 < n_1$, permettant d'obtenir une structure planaire.

Le guide $G_{21}$ se poursuit sur toute la dimension de l'élément représenté sur la figure 1, et débouche dans le guide $G_{22}$. Il croise à angle droit au point 21, un guide $G'_{21}$ de structure identique aux guides $G_{21}$ et $H_{21}$.

Le guide $H_{21}$ au contraire est muni d'un miroir $M_{21}$ dont la surface est perpendiculaire au plan du substrat 1, et placée à 45° de l'axe optique de ce guide $H_{21}$. Ce miroir renvoie l'onde venant du guide $H_{21}$ vers un guide $H'_{21}$ de même structure et perpendiculaire à ce dernier.

Les guides $H'_{21}$ et $G'_{21}$ sont disposés parallèlement l'un à l'autre, séparés par la distance d de couplage et sur une longueur D définie précédemment.

La couche 2 de planarisation montre une fenêtre $Q_{21}$ découvrant la zone 21 d'intersection des guides $G_{21}$, $G'_{21}$, et la région du miroir $M_{21}$ appliquée au guide $H_{21}$.

Les dimensions de la fenêtre $Q_{21}$ sont petites devant la longueur de couplage D, ce qui n'apparaît pas sur la figure 1, laquelle est une représentation schématique de la structure selon l'invention et non pas une représentation selon une échelle donnée.

L'élément de commutation selon l'invention comporte encore un premier système de quatre électrodes dont les positions en surplomb des guides $G_{21}$ et $H_{21}$ sont repérées par $E_{21}$. Ce système est formé de deux plots disposés en surplomb du guide $G_{21}$ parallèlement à son axe, séparés l'un de l'autre d'une petite distance pour éviter les courts−circuits, et de deux plots identiques disposés en surplomb du guide $H_{21}$. Ces électrodes sont formées en surface de la couche planaire 2 et un procédé pour leur réalisation sera décrit en détail ultérieurement.

On notera que le fonctionnement de ces électrodes peut être obtenu par l'application de potentiels ou bien de courants. On peut ainsi moduler le signal soit par la création d'un champ électrique résultant en un effet électrooptique ou en une désertion de porteurs, soit par l'injection de porteurs.

L'élément de commutation selon l'invention comporte enfin un second système de quatre électrodes, identique au premier système, formé en surplomb des guides $G'_{21}$ et $H'_{21}$, et dont la position est repérée par $E'_{21}$.

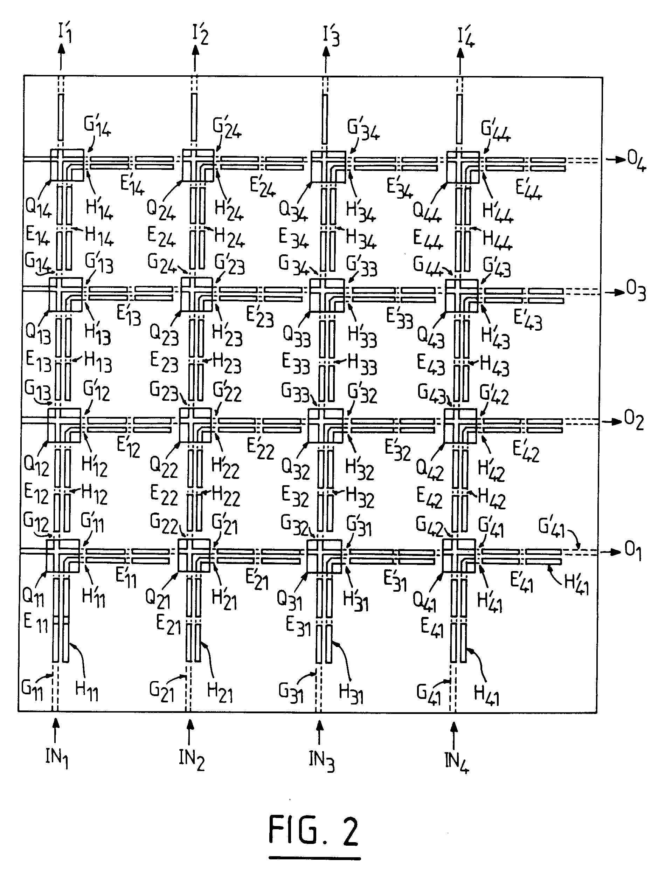

Une matrice de commutation formée de 4 x 4 de ces éléments est représentée schématiquement vue du dessus sur la figure 2. Cette matrice est obtenue en plaçant en cascade, sur un substrat 1, 4x4 structures telles que représentées sur la figure 1.

Cette matrice peut fonctionner de la façon suivante (cf. Fig. 6a et 6b): un signal lumineux $\phi$ est par exemple injecté à l'entrée IN1 de la matrice dans le guide $G_{11}$. Par l'action d'un potentiel ou d'un courant approprié appliqué sur le système d'électrodes $E_{11}$, le faisceau lumineux peut :

- soit être maintenu dans $G_{11}$ sans passer dans $H_{11}$ par couplage spontané dû à la distance de couplage $\underline{d}$ (voir figure 6a) ;
- soit passer entièremenṯ dans $H_{11}$ (voir figure 6b).

Dans ce dernier cas, le faisceau est réfléchi dans le guide $H'_{11}$ au moyen du miroir $M_{11}$ et un potentiel ou un courant approprié est appliqué sur le système d'électrodes $E'_{11}$ pour faire passer le faisceau du guide $H'_{11}$ dans le guide $G'_{11}$. Les guides $G_{ii}$ et $G'_{ii}$ sont dits "guides principaux". Le guide principal $G'_{11}$ qui se prolonge par les guides $G'_{21}$, ..., $G'_{41}$, conduit le faisceau qui peut être recueilli sur la sortie $O_1$ (voir figure 2).

Au contraire, si le faisceau a été maintenu dans le guide principal $G_{11}$, il peut ensuite être conduit soit sur la sortie directe $I'_1$, soit sur l'une des sorties transverses $O_2,...O_4$ en jouant sur les po-tentiels appliqués aux électrodes $E_{12},...E_{14}$.

Une matrice de commutation peut être formée de nxn éléments selon l'invention. Elle comprend alors n entrées $IN_1,... IN_4,....IN_n$ telles, qu'un signal lumineux injecté sur l'une d'elles, par exemple $IN_i$, peut être soit commuté vers l'une des sorties des guides principaux transverses $O_1,...O_4,...O_n$, soit dirigé vers la sortie du guide principal direct $I'_i$. Une telle matrice peut aussi comporter 1xn éléments selon l'invention, ou bien encore nxm de ces éléments, selon l'application envisagée.

La structure de l'élément de commutation selon l'invention permet la mise en oeuvre d'un procédé de réalisation particulièrement avantageux.

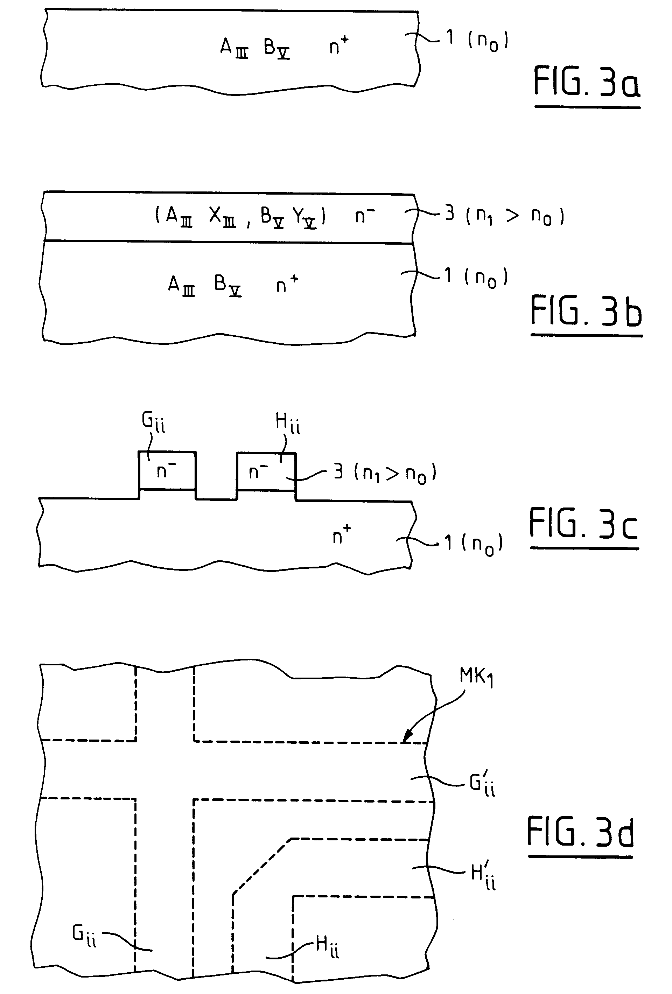

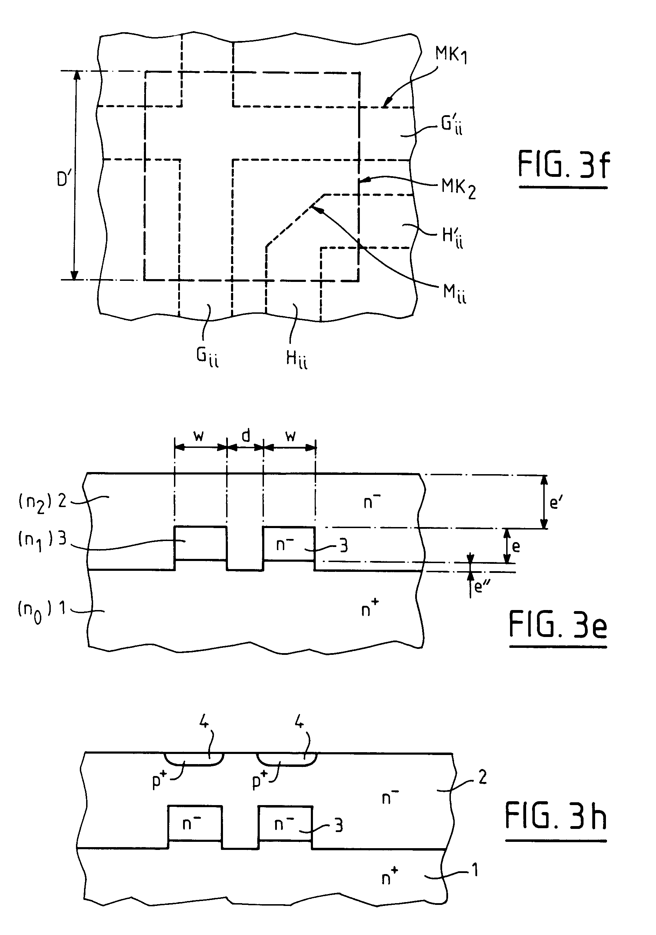

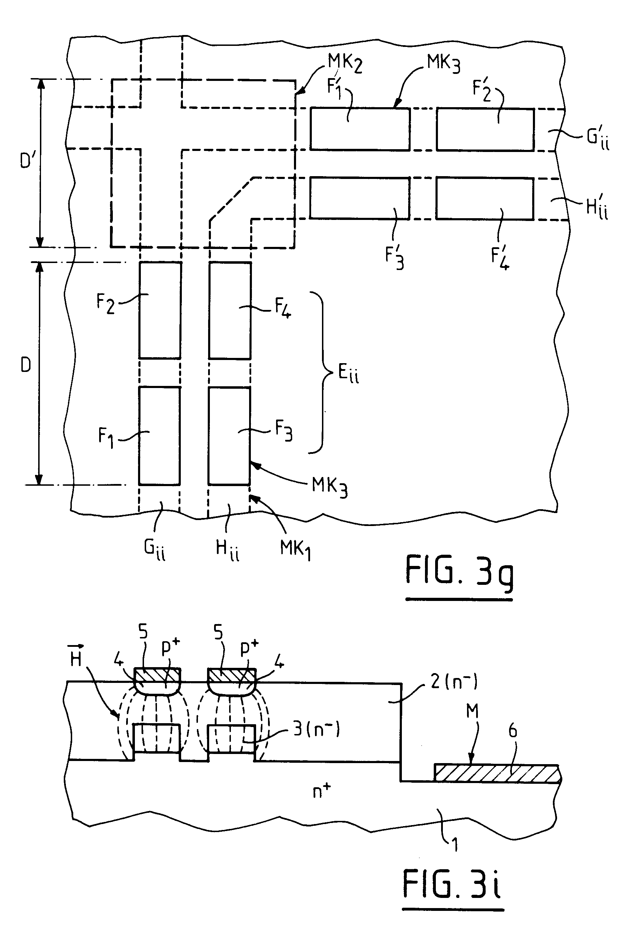

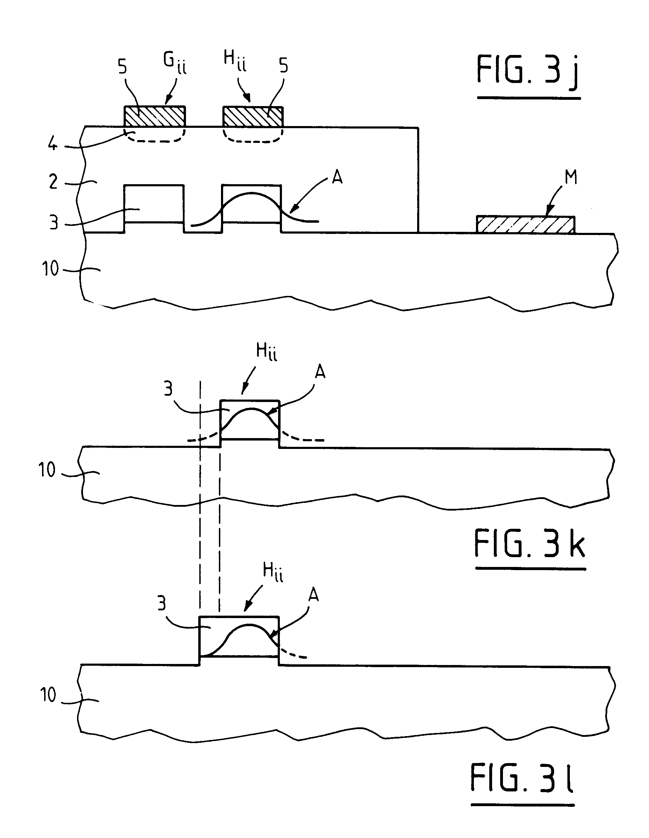

Selon l'invention, ce procédé comprend au moins les étapes suivantes illustrées par les différentes figures 3 :

    a/ formation d'un substrat 1 semiconducteur monocristallin, présentant une face plane orientée selon un plan cristallographique, ce substrat étant réalisé en un matériau binaire $A_{III} B_V$ choisi pour présenter un faible indice de réfraction $n_0$ pour une longueur d'onde donnée $\lambda$ d'utilisation du dispositif, et de type de conductivité $n^+$ pour permettre l'activation électrique du dispositif (voir figure 3a).

    b/ Formation pour constituer les guides, en surface du substrat 1, d'une couche épitaxiale 3 plane en un matériau par exemple quaternaire $(A_{III}X_{III}, B_VY_V)$ choisis pour présenter un indice de réfraction $n_1 > n_0$ à la longueur d'onde $\lambda$, et de type de conductivité $n^-$ (voir figure 3b).

    c/ Gravure, par exemple par la méthode de gravure ionique réactive (RIE), de la couche quaternaire 3, jusqu'à produire une gravure du substrat 1 sur une profondeur $e''$ n'excédant pas 0,5 $\mu$m, par exemple sur une profondeur de 0,1 à 0,5 $\mu$m (voir figure 3c). Cette gravure est effectuée selon un masque $MK_1$, représenté vu du dessus sur la figure 3d, qui permet de conserver après gravure en relief sur le substrat :

    - les rubans qui forment les guides princi-paux directs $G_{ii}$ et transverses $G'_{ii}$ ;
    - les rubans qui forment les guides secon-daires $H_{ii}$ et $H'_{ii}$,

et qui permet de former les miroirs $M_{ii}$.

La gravure RIE présente l'avantage d'obtenir des flancs de gravure perpendiculaires au plan des surfaces à graver (voir figure 3c), ce qui est important pour la réalisation des miroirs $M_{ii}$.

Par le procédé selon l'invention les guides de lumière et les miroirs sont formés en une seule étape et avec un seul masque, par une technologie dite autoalignée.

Les indices relatifs du substrat et des guides sont choisis pour obtenir le confinement de la lumière dans les guides. Mais surtout la composition des couches respectivement quaternaires et binaires permet d'obtenir le guidage ;

    d/ Réalisation, par croissance épitaxiale d'une couche 2, d'un matériau binaire $(A_{III}, B_V)$ d'indice faible $n_2$, tel que $n_2 < n_1$, et de type de conductivité $n^-$ (voir figure 3e).

Le but de cette étape est d'obtenir un dispositif planaire. La croissance épitaxiale sera donc réalisée à cet effet soit en phase vapeur, soit en phase liquide, mais dans des conditions de croissance telles qu'en surface des guides la couche soit planaire. l'épaisseur de couche de planarisation 2 au-dessus des guides est $e'$.

On a vu précédemment que le dispositif conforme à la publication de A. Carenco, étant du type à rubans externes, présentait un faible coefficient de couplage et donc nécessitait une grande longueur de couplage.

Selon l'invention, au contraire, les guides sont noyés dans la couche 2 de planarisation d'indice légèrement différent. Dans ces conditions le coefficient de couplage est alors environ 4 fois supérieur au coefficient de couplage obtenu dans le dispositif connu de l'état de la technique. La longueur de couplage D est donc fortement diminuée. Le dispositif selon l'invention est miniaturisé et ses dimensions sont appropriées à former un dispositif intégré.

De plus, les matériaux $A_{III}$, $B_V$ employés, et les techniques de croissance épitaxiale et de gravure RIE utilisées sont en parfaite synergie avec la réalisation de circuits intégrés annexes au dispositif électro-optique selon l'invention.

Il est en outre important de noter que, durant la croissance épitaxiale de la couche de planarisation 2, des régions $Q_{ii}$ approximativement carrées et correspondant aux régions d'intersection des guides principaux $G_{ii}$, $G'_{ii}$, et aux régions des miroirs $M_{ii}$, sont masquées par un masque $MK_2$ afin d'être préservé de la couche 2.

En effet, les miroirs $M_{ii}$ ne peuvent être à réflexion totale que si le milieu externe au guide, à l'emplacement de ces miroirs, est l'air, ce qui est obtenu par le moyen des ouverture $Q_{ii}$ de la couche 2 (la figure 3e montre les guides en coupe et la figure 3f montre le masque $MK_2$ vu du dessus).

On choisira de façon avantageuse de réaliser les guides d'épaisseur $e \simeq 1\mu m$ et de largeur $w \simeq 2\mu m$ (voir figure 3e) séparés par une distance $d \simeq 1,5\mu m$ et de réaliser la couche de planarisation 2 d'épaisseur $e'$ au-dessus des guides de environ $1\mu m$.

On notera que la couche de planarisation 2 apporte un autre avantage qui est de réduire les pertes dans les guides. En effet, du fait que les parois longitudinales et supérieures des guides sont obtenues par gravure, elles peuvent présenter un aspect rugueux qui entraînerait, si l'air était le milieu extérieur, des pertes importantes par diffusion.

Du fait que les guides sont enterrés dans un milieu d'indice $n_2$ relativement proche de celui $n_1$ des guides, ces pertes sont d'autant plus petites que la différence $n_1 - n_2$ est petite. Cet effet est différent de celui du confinement qui provoque le guidage dans le milieu d'indice $n_1$, selon lequel une faible différence d'indice $n_1 - n_2$ suffit à assurer ce guidage. D'autre part, une faible différence d'indice est également nécessaire pour assurer le fonctionnement monomode.

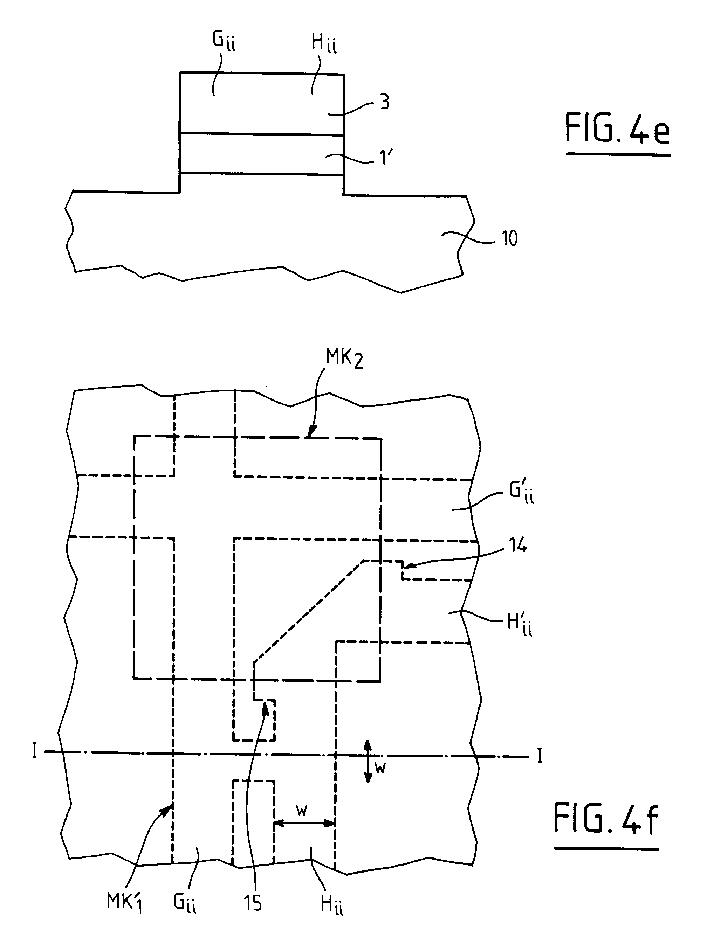

Il y aura certes cependant des pertes dans les guides au niveau des ouvertures $Q_{ii}$ dans la couche 2. Mais ces ouvertures sont prévues de faibles dimensions, favorablement $D' \times D' \simeq 10\mu m \times 10\mu m$ au maximum, afin de limiter ces pertes. D'autre part, afin de limiter les pertes, il peut être prévu d'agrandir la largeur $\underline{w}$ des guides $H_{ii}$ et $H'_{ii}$ dans la région des ouvertures $Q_{ii}$ par des décrochements 14 et 15, comme il est montré par exemple sur la figure 4f. En effet, l'onde A qui se propage dans le guide enterré a la forme qui est montrée sur la figure 3j alors que l'onde A qui se propage dans le guide surmonté d'air a la forme montrée sur la figure 3k. C'est pourquoi l'élargissement du guide par les décrochements 14 et 15 permet de diminuer les pertes, comme montré en coupe sur la figure 3ℓ.

Enfin la couche 2 de planarisation présente encore l'avantage d'offrir une surface supérieure particulièrement appropriée à la réalisation des électrodes en surplomb des guides.

e) Réalisation, pour former les systèmes d'électrodes $E_{ii}$ et $E'_{ii}$, de zones 4 de type de conductivité $p^+$, dans la couche de planarisation 2 en surplomb des guides, par exemple par implantation ionique (voir figure 3h). On formera ainsi (Fig. 3g) 2 régions $F_1$ et $F_2$ en surplomb des guides $G_{ii}$, et 2 régions $F_3$ et $F_4$ en surplomb des guides $H_{ii}$. L'implantation ionique est faite en une seule opération à travers les ouvertures d'un masque $MK_3$ tel que représenté par exemple sur la figure 3g. Les régions de type $P^+$ peuvent aussi être réalisées par diffusion d'ions. La longueur de couplage D est seulement légèrement inférieure au mm, alors que la dimension $D'$ de l'ouverture $Q_{ii}$ est de l'ordre de $10\mu m$ comme on l'a dit précédemment ;

f) Réalisation, pour continuer la formation des systèmes d'électrodes $E_{ii}$ et $E'_{ii}$ de couches métalliques 5 en surface des zones (4) de conductivité $p^+$ par tout moyen connu de l'état de la technique pour réaliser un contact ohmique, par exemple au moyen d'une multicouche de titane-platine-or (Ti-Pt-Au) (voir figure 3i).

La mise en place du masque $MK_3$ ne pose pas de problème de définition pour deux raisons. La première raison est que la structure est planaire. Les procédés photolithographiques sont donc d'une mise en oeuvre facile. La seconde raison est que, bien que les guides ne soient plus visibles au moment de la mise en place du masque $MK_3$, ce dernier sera centré, et les ouvertures seront alignées, en se servant des positions des ouvertures $Q_{ii}$ comme repères. Ceci constitue un avantage supplémentaire dû à la structure du dispositif selon l'invention.

Il faut encore noter que la gravure RIE réalisée lors de l'étape c/ et qui s'effectue jusque dans le substrat résultant en un petit creusement de ce substrat sur une profondeur $e''$, apporte des avantages au dispositif selon l'invention. Tout d'abord, il est plus aisé de graver légèrement le substrat que d'arrêter la gravure réellement exactement au niveau de la surface supérieure du substrat. Cette façon de procéder constitue donc une facilité technologique. Mais de plus, ce petit creusement du substrat permet d'augmenter l'interaction entre le champ électrique et le champ optique pour maximiser l'effet électrooptique dans le dispositif selon l'invention. Les guides de lumière se trouvent ainsi mieux isolés, comme le montre la figure 3i en coupe où sont représentées les lignes de champ électrique $\vec{H}$.

Dans une variante du dispositif selon l'invention, le substrat n'est plus de type de conductivité $n^+$. Il est semi-isolant. Cette variante est avantageuse dans le cas où l'on désire associer à la matrice de commutation, et réaliser sur le même substrat, des circuits électroniques intégrés, tels que des détecteurs, amplificateurs, etc, incluant des diodes ou des transistors à effet de champ.

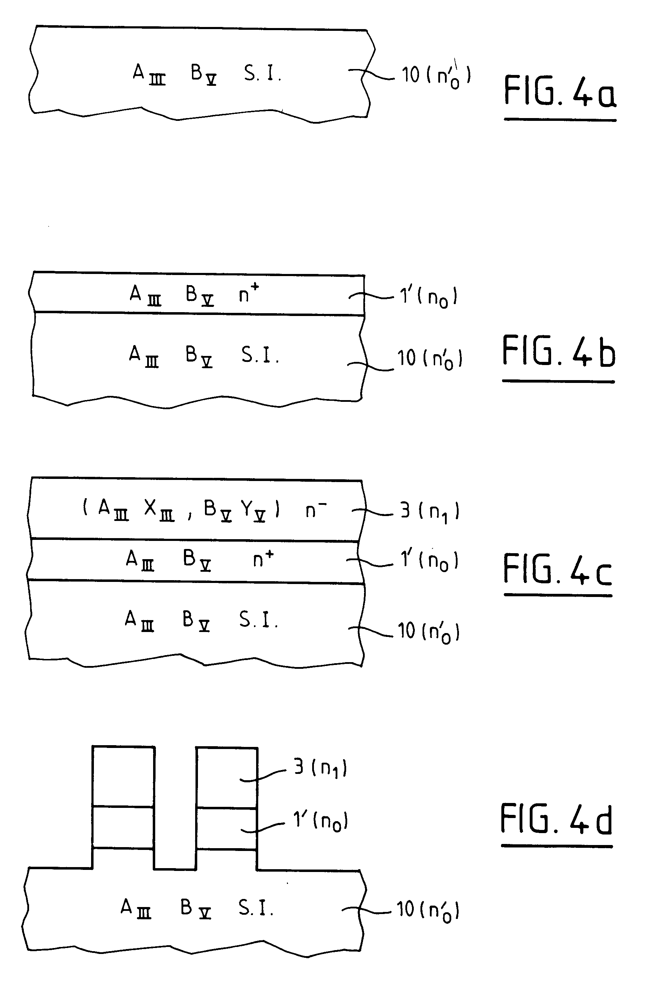

Dans ce cas, les étapes a/, b/, c/ du procédé de réalisation décrit précédemment sont remplacées par la suite d'étapes illustrées par les figures 4 :

a'/ Formation d'un substrat 10 monocristallin, présentant une face plane orientée selon un plan cristallographique, réalisé en un matériau binaire $A_{III} B_V$ choisi pour présenter un faible indice de réfraction $n'_0$ pour une longueur d'onde $\lambda$, et semi-isolant (voir figure 4a).

b'$_1$/ Formation en surface du substrat 10 d'une couche épitaxiale 1' plane du matériau $A_{III} B_V$ du type de conductivité $n^+$. L'épaisseur de cette couche sera favorablement 0,5 $\mu$m. L'indice de réfraction de cette couche sera choisi faible $n_0 \simeq n'_0$ pour la longueur d'onde $\lambda$ (voir figure 4b).

b'$_2$/ Formation en surface de la couche 1' d'une couche épitaxiale 3 plane d'épaisseur environ 0,5 à 1 $\mu$m en un matériau par exemple quaternaire $(A_{III}X_{III}, B_V, Y_V)$ choisi pour présenter un indice de réfraction $n_1 > n_0$ ou $n'_0$ à la longueur d'onde $\lambda$, et de type de conductivité $n^-$ (voir figure 4c).

c') Gravure par exemple par la méthode de gravure ionique réactive RIE, des couches 3 et 1' jusqu'à attaquer le substrat inférieur 10 sur une profondeur e'' n'excédant pas 0,5 $\mu$m (voir la figure 4d). Cette gravure est faite selon un masque MK'$_1$. Le masque MK'$_1$ délimite les guides de lumière comme il est représenté sur la figure 3c, et est utilisé pour une gravure de la couche 3 et d'une partie de la couche sous-jacente 1', mais il permet de conserver des parties des couches 1' et 3 pour former des "ponts", c'est-à-dire des connexions dans la couche 1' de conductivité $n^+$ afin de relier électriquement tous les guides entre eux.

En effet, c'est sur cette couche $n^+$ que seront établis le ou les contacts de masse M, et, si l'on veut éviter de réaliser de trop nombreux contacts de masse il est avantageux que les parties de couche $n^+$ sous les guides soient simplement reliées entre elles (voir la figure 4e en coupe selon l'axe I-I de la figure 4f, laquelle est une représentation du dispositif vu du dessus). La réalisation des ponts de connexion électrique d'un guide à l'autre n'est pas critique, et ces ponts peuvent être mis en place n'importe où dans le dispositif pourvu qu'aucun guide ou tronçon de guide ne se trouve isolé. D'autre part on sait que la présence de ces ponts ne perturbe pas la propagation de l'onde dans les guides pourvu qu'ils soient de petite dimension transversale, par exemple équivalente à la largeur w d'un guide. L'un ou l'autre de ces procédés de réalisation conduisant à l'une ou l'autre des variantes du dispositif selon l'invention se poursuit par les étapes suivantes :

g/ Réalisation d'électrodes M de contacts de masse 6 en surface de la couche 1 ou 1', de type de conductivité $n^+$ (voir la figure 3i). A cet effet, il est prévu, à des endroits dépourvus de dispositifs, de graver les couches supérieures jusqu'à découvrir une portion de la couche 1,1' et d'y déposer une couche métallique du type contact ohmique, par exemple une multicouche or-germanium-nickel (Au-Ge-Ni). Selon les cas, ces électrodes de contact de masse peuvent être réalisées sur l'une ou l'autre des faces du dispositif. En effet si le substrat est de type $n^+$, le contact de masse peut être pris ou bien sur la face arrière du dispositif, ou bien sur la face avant en gravant les couches supérieures. Si le substrat est semi-isolant, le contact de masse sera pris sur la face avant en gravant les couches 2 et 3.

L'utilisation du dispositif selon l'invention est prévue entre autres pour les télécommunications. A cet effet, les longueurs d'onde du signal lumineux transporté par les guides peuvent être :

$\lambda_0 \simeq 1,3\ \mu$m,
ou $\lambda_1 \simeq 1,55\ \mu$m

Dans ces conditions, dans la formulation du composé binaire $A_{III} B_V$ constituant le substrat, $A_{III}$ peut être avantageusement l'élément indium (In) et $B_V$ l'élément phosphore (P), formant le phosphure d'indium (InP).

Ce substrat peut être rendu semi-isolant par un dopage au moyen de l'ion Fe introduit à une concentration de : $10^{16}$ cm$^{-3}$.

Le composé InP peut aussi être de type de conductivité $n^+$ s'il est dopé à l'aide de l'ion S à une concentration de l'ordre de $2.10^{18}$ impuretés au cm$^3$.

L'indice est alors

$n_o \simeq 3,1994$ à $\lambda \simeq 1,32\mu m$.

Le composé quaternaire formant la couche 3, approprié à constituer les guides peut présenter la formulation $A_{III}\ X_{III},\ B_V\ Y_V$ dans laquelle A est l'indium (In), X est le gallium (Ga), B est le phosphore (P) et Y est l'arsenic (As). Sa composition est alors $(Ga_x\ In_{1-x},\ As_y\ P_{1-y})$ dans laquelle la concentration est $y \simeq 0,1$ et la concentration $x \simeq 0,46y \simeq 0,046$. Ce composé est d'indice $n_1 > n_0$ tel que $n_1 \simeq 3,2049$ à $\lambda \simeq 1,32\mu m$. La longueur d'onde de gap de GaInAsP est $0,97\mu m$.

Ce composé quaternaire (Ga In, AsP) pourra montrer une conductivité $n^-$ s'il est simplement dépourvu de dopage intentionnel.

La couche de planarisation 2 pourra, comme on l'a dit précédemment être faite d'un composé binaire $A_{III}\ B_V$ de type de conductivité $n^-$, c'est-à-dire par exemple de phosphure d'indium InP non dopé intentionnellement, d'indice :

$n_2 \simeq 3,2049$ à $\lambda \simeq 1,32\mu m$.

Dans une variante de l'invention, la couche de planarisation 2 pourra être aussi d'un composé quaternaire $(A_{III}\ X_{III},\ B_V\ Y_V)$ tel que $(Ga_x\ In_{1-x}\ As_y\ P_{1-y})$ de type de conductivité $n^-$ c'est-à-dire non dopé intentionnellement dans lequel la concentration x est équivalente à 0,46y avec $y \simeq 0,03$ à 0,05.

Les caissons de type de conductivité $p^+$ pourront être obtenus en implantant ou en diffusant selon une technique en soi connue, des ions par exemple Zn ou Be ou Cd à une concentration de $10^{18}$ à $10^{19}$ $cm^{-3}$.

Ainsi réalisée une matrice de 4 x 4 éléments de commutation aura pour dimensions : 4 x 4 $mm^2$, la dimension d'un élément étant de l'ordre de 1 x 1 $mm^2$ imposée principalement par la longueur de couplage D.

Comme on l'a dit plus haut, la technologie de réalisation de la matrice selon l'invention est en synergie avec la réalisation de dispositifs intégrés tels que des détecteurs D.

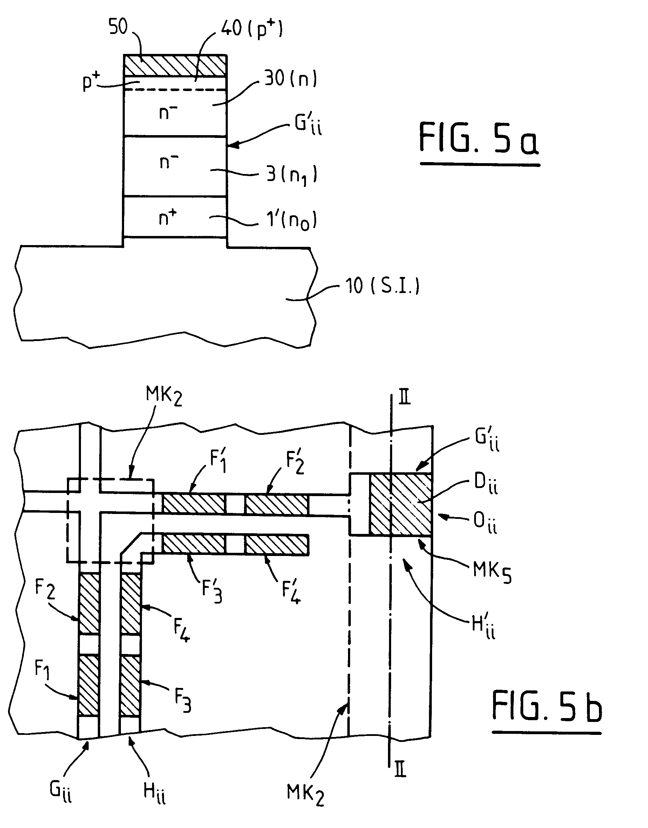

Ces détecteurs pourront être par exemple des diodes $D_{ii}$ formées en surface des guides de sortie principaux $I'_{ii}$ ou $O_{ii}$ (voir fig.5b qui est une vue du dessus d'un tel dispositif et figure 5a qui est une vue en coupe selon l'axe II-II). Dans la région des détecteurs $D_{ii}$ on notera que la largeur $\overline{w}$ des guides $H'_{ii}$ est augmentée.

Dans les exemples de réalisation cités précédemment où le substrat est un semiconducteur binaire $A_{III},\ B_V$ tel que InP, ces diodes pourront comprendre une couche absorbante 30 formée en surface de la couche 3 des guides. Cette couche absorbante 30 sera favorablement une couche d'un matériau ternaire $(A_{III}\ X_{III},\ Y_{III})$ tel que GaIn As de type de conductivité $n^-$ d'épaisseur environ $1\mu m$. Cette couche absorbante 30 sera réalisée dans l'ouverture d'un masque $MK_5$ qui couvre l'ensemble du dispositif à l'exception des sorties des guides principaux directs et transverses. L'élaboration de cette couche est faite par exemple par croissance épitaxiale en phase vapeur ou liquide. Puis le masque $MK_5$ est éliminé pour permettre la réalisation de l'étape c).

L'étape c) de gravure des couches, ici 30, 3 et 1', se fait comme déjà décrite. Puis entre l'étape c) et l'étape d) on intercale une étape durant laquelle on dépose sur la zone de détection une couche diélectrique de protection qui peut être $MK_2$ pour préserver la zone de détection du dépôt de la couche de planarisation 2. Cette couche de protection $MK_2$ est conservée jusqu'à la fin de l'étape d) de planarisation, puis elle est retirée. Le masque $MK_3$ qui délimite les zones d'implantation $p^+$ sera alors pourvu d'ouvertures en surface des régions de détection, et les étapes e/ et f/ se poursuivront comme il a été dit précédemment. Dans ces conditions, on formera une région 40 de type de conductivité $p^+$ dans chaque zone de détection 30 puis un contact d'électrode 50 (voir fig. 5a).

D'autres matériaux pourront être envisagés pour mettre en oeuvre l'invention, et utilisés dans d'autres dimensions. Dans ces conditions, l'onde transportée aura une longueur d'onde différente et les applications envisagées pourront être autres que les télécommunications.

Le procédé de réalisation pourra aussi être mis en oeuvre avec d'autres techniques de gravure, ou de dépôt.

**Revendications**

1. Elément de commutation optique pour diriger un signal lumineux reçu par son entrée, sélectivement, sur l'une ou l'autre de ses deux sorties, ledit élément de commutation comprenant, sur un substrat (1) semiconducteur monocristallin en un matériau d'un premier indice de réfraction n0, une pluralité de guides de lumière (Gii, Hii, H'ii, G'ii) constitués chacun d'un ruban linéaire en un matériau semiconducteur d'un second indice de réfraction n1 supérieur à celui du substrat, les dimensions de ces guides étant telles qu'ils transportent chacun une onde monomode, ladite pluralité comprenant:

   – un premier guide de lumière (Gii), dit guide principal, réalisé sur la face supérieure plane du substrat, ledit premier guide s'étendant linéairement de l'entrée à une première sortie, dite sortie directe, de l'élément de commutation,

– un premier tronçon de guide de lumière (Hii), dit premier guide secondaire, s'étendant parallèlement au guide principal (Gii) sur une longueur D dite longueur de couplage et séparé de ce dernier par une faible distance d dite distance de couplage,

– un premier système d'electrodes (Eii, M) agencé sur l'ensemble guide principal/premier guide secondaire pour l'application de potentiels ou de courants permettant la commutation de lumière de l'un à l'autre de ces guides,

– un miroir (Mii) agencé sur ledit premier guide secondaire (Hii), dans une région située au-delà de la zone des premières electrodes (Eii), ledit miroir étant constitué par une face latérale plane orthogonale au plan du substrat et formée à 45° de l'axe optique de ce guide,

– un second guide de lumière (G'ii), dit guide principal transverse, également réalisé sur la face supérieure plane dudit substrat, ledit guide principal transverse s'étendant orthogonalement au guide principal (Gii) en le croisant, au delà desdites premières electrodes (Eii), et ce guide principal transverse étant relié par son extrémité opposée au point de croisement à la seconde sortie, dite sortie transverse, de l'élément de commutation,

– un second tronçon de guide de lumière (H'ii), dit second guide secondaire, disposé à 90° dudit premier guide secondaire (Hii) et relié à ce dernier pour recevoir la lumière réfléchie par le miroir (Mii), ledit second guide secondaire s'étendant parallèlement au guide principal transverse (G'ii) à une faible distance de ce dernier égale à ladite distance de couplage d, et sur une longueur égale à ladite longueur de couplage D, et

– un second système d'electrodes (E'ii, M) agencé sur l'ensemble second guide secondaire/guide principal transverse pour l'application de potentiels ou de courants permettant la commutation de lumière de l'un à l'autre de ces guides, ledit élément de commutation étant caractérisé en ce que:

– lesdits premier et second guides secondaires (Hii, H'ii) sont également réalisés sur la face supérieure plane du substrat, sur un côté des guides principal et principal transverse en regard l'un de l'autre, et

– les guides (Gii, Hii, H'ii, G'ii) et le substrat (1) sont recouverts d'une couche planaire (2) de matériau semiconducteur d'un troisième indice de réfraction n2 inférieur à celui des guides, sur la face supérieure plane de laquelle sont mises en oeuvre lesdites premières et secondes electrodes de polarisation (Eii, E'ii), et qui comporte une ouverture (Qii) dégageant les structures des guides jusqu'au substrat autour du miroir (Mii).

2. Elément selon la revendication 1, caractérisé en ce que la section des guides (Gii, Hii, H'ii, G'ii) est rectangulaire.

3. Elément selon la revendication 2, caractérisé en ce que le substrat (1) est en un matériau binaire $A_{III}B_V$ de type de conductivité $n^+$, en ce que les rubans (3) formant les guides sont en un matériau quaternaire ($A_{III}X_{III}$, $B_V Y_V$) de type de conductivité $n^-$, en ce que la couche planaire (2) est en un matériau choisi parmi un matériau binaire ($A_{III}$, $B_V$) et un matériau quaternaire ($A_{III} X_{III}$, $B_V Y_V$) de type de conductivité $n^-$.

4. Elément selon la revendication 2, caractérisé en ce que le substrat (10) est en un matériau binaire ($A_{III}, B_V$) semi-isolant, en ce que les rubans formant les guides sont constitués par la superposition d'une couche (1') du matériau binaire ($A_{III}$, $B_V$) de type de conductivité $n^+$ et d'une couche (3) d'un matériau quaternaire ($A_{III} X_{III}$, $B_V Y_V$) de type de conductivité $n^-$, en ce que la couche planaire (2) est en un matériau choisi parmi un matériau binaire ($A_{III}$, $B_V$) et un matériau quaternaire ($A_{III} X_{III}$, $B_V Y_V$) de type de conductivité $n^-$ et en ce que les portions de couche (1') $n^+$ formant les couches inférieures des guides sont électriquement reliées les unes aux autres.

5. Elément selon l'une des revendications 3 ou 4, caractérisé en ce que le systeme d'électrodes est constitué d'une part par une électrode M (6) de type ohmique, reliée à la masse, formée par une couche métallique réalisée en contact avec le matériau de type de conductivité $n^+$ (1 ou 1'), et d'autre part par des systèmes $E_{ii}$ et $E'_{ii}$ de respectivement quatre électrodes $F_1$, $F_2$, $F_3$, $F_4$ et $F'_1$, $F'_2$, $F'_3$, $F'_4$ groupées de façon symétrique, deux électrodes $F_1$, $F_2$ ou $F'_1$, $F'_2$ dans l'alignement l'une de l'autre sur le guide principal et deux électrodes $F_3$, $F_4$ ou $F'_3$, $F'_4$ dans l'alignement l'une de l'autre en vis-à-vis sur le guide secondaire, formées chacune par la superposition d'un caisson (4) de type de conductivité $p^+$ en surplomb des guides formé dans la couche planaire (2) et d'une couche métallique (5) formant un contact ohmique sur cette couche planaire (2).

6. Elément selon l'une des revendications 3 à 5,caractérisé en ce que l'élément A est l'indium (In), l'élément B le phosphore (P), l'élément X le gallium (Ga), l'élément Y l'arsenic (As).

7. Elément selon l'une des revendications 3 à 6,caractérisé en ce que les contacts ohmiques sur la couche (1,1') $n^+$ sont formés du multicouche $Au-Ge-Ni$, et en ce que les contacts ohmiques (5) sur la couche (4) $p^+$ sont formés du multicouche $Ti-Pt-Au$.

8. Matrice de commutation optique, comportant un nombre n d'entrées $IN_1$, $IN_2$,... $IN_n$, un nombre n de sorties directes $I'_1$, $I'_2$,...., $I'_n$, et un nombre m de sorties transverses $O_1$, $O_2$,..., $O_m$ entre lesquelles s'opère la commutation, caractérisée en ce qu'elle est formée de n x m éléments de commutation selon l'une des revendications 1 à 7 juxtaposés de façon bidirectionnelle de telle manière que les guides principaux et les guides secondaires de chaque éléments sont respectivement dans le prolongement les uns des autres.

9. Matrice selon la revendication 8, caractérisée en ce que chaque guide principal de sortie directe ou transverse est directement muni en sa surface supérieure d'un détecteur D de signal lumineux constitué d'une couche absorbante (30) pour la longueur d'onde λ, d'indice de réfraction $n_3$ supérieur à celui des guides, couche absorbante (30) dans laquelle est formé un caisson (40) de type $p^+$ en surface duquel est réalisé un contact de type ohmique (50).

10. Matrice selon la revendication 9, dans la mesure ou elle est constituée d'éléments conformes à l'une des revendications 3 à 7, caractérisée en ce que la couche absorbante (30) est un matériau ($A_{III}X_{III}$, $B_V$).

11. Matrice selon la revendication 9, caractérisée en ce que les contacts ohmiques (50) des détecteurs sont formés des multicouches $Ti-Pt-Au$.

12. Procédé de réalisation d'un élément de commutation selon la revendication 1, comprenant au moins les étapes suivantes:

a/ formation d'un substrat (1) semiconducteur monocristallin présentant une face plane orientée selon un plan cristallographique, ce substrat étant réalisé en un matériau binaire AIIIBV, de faible indice de réfraction no pour une longueur d'onde donnée λ d'utilisation et de type de conductivité $n^+$;

b/ formation en surface du substrat (1) par croissance épitaxiale d'une couche plane (3) en un matériau quaternaire AIIIXIIIBVYV d'indice de réfraction n1>n0 à la longueur d'onde λ et de type de conductivité $n^-$;

c/ gravure, par la méthode de gravure ionique réactive (RIE), de la couche quaternaire (3) jusqu'à produire une gravure du substrat (1) sur une faible profondeur, cette gravure étant effectuée à l'aide d'un premier masque (MK1) qui permet de conserver après cette gravure en relief sur le substrat les rubans qui forment les guides principaux direct (Gii) et transverse (G'ii) et les rubans qui forment les guides secondaires (Hii et H'ii), et qui permet de former le miroir (Mii) à 45° des axes des guides secondaires (Hii et H'ii) et perpendiculaire au plan du substrat;

d/ réalisation par croissance épitaxiale d'une couche de planarisation (2) d'un matériau binaire AIIIBV d'indice faible n2<n1 et de type de conductivité $n^-$, en protégeant par un second masque (MK2) une region (Qii) approximativement carrée correspondant à la region d'intersection des guides principaux (Gii, G'ii) et à la région du miroir (Mii), de façon que les guides d'onde (Gii, Hii, G'ii, H'ii) et le miroir (Mii) présentent les positions relatives selon la revendication 1;

e/ réalisation, pour former des systèmes d'électrodes Eii, E'ii, de zones (40,4) de type de conductivité $p^+$, dans la couche de planarisation en surplomb des guides d'onde, par implantation ionique ou diffusion d'ions à travers les ouvertures d'un troisième masque (MK3); et,

f/ réalisation de contacts ohmiques métalliques (5,50) en surface des zones de type de conductivité $p^+$.

13. Procédé de réalisation d'un élément de commutation selon la revendication 4, comprenant les étapes suivantes:

a'/ formation d'un substrat (10) monocristallin présentant une face plane orientée selon un plan cristallographique, réalisé en un matériau binaire AIIIBV choisi pour présenter un faible indice de réfraction $n_0'$ pour une longueur d'onde λ, et semi-isolant;

b'1/ formation en surface du substrat (10) d'une couche épitaxiale (1') plane du matériau AIIIBV de type de conductivité $n^+$ et d'indice de réfraction faible $n_0$ voisin de $n_0'$ pour la longueur d'onde $\lambda$;

b'2/ formation en surface de la couche (1') d'une couche épitaxiale (3) plane d'épaisseur environ 0,5 à 1 micromètre en un matériau présentant un indice de réfraction $n1 > n0$ ou $n'0$ à la longueur d'onde $\lambda$, et de type de conductivité $n^-$;

c'/ gravure, par ex. par la méthode de gravure ionique réactive RIE, des couches (3) et (1') jusqu'à attaquer le substrat inférieur (10) sur une petite profondeur, cette gravure étant faite selon un premier masque (MK'$_1$), délimitant les guides d'onde principaux (Gii,G'ii) et secondaires (Hii,H'ii) et le miroir (Mii) à 45˚ de l'axe optique des guides et perpendiculaire au plan du substrat, et permettant de conserver des portions des couches (1',3) pour former de connexions dans la couche (1') de conductivité $n^+$ entre les différentes parties des guides;

d/ réalisation par croissance épitaxiale d'une couche de planarisation (2) d'un matériau binaire AIIIBV d'indice faible $n2 < n1$ et de type de conductivité $n^-$, en protégeant par un masque second (MK2) une region Qii approximativement carrée correspondant à la region d'intersection des guides principaux (Gii,G'ii) et à la region du miroir (Mii), de façon que les guides d'onde (Gii,Hii,G'ii,H'ii) et le miroir (Mii) présentent les positions relatives selon la revendication 1;

e/ réalisation, pour former des systèmes d'électrodes Eii,E'ii, de zones (40,4) de type de conductivité $p^+$, dans la couche de planarisation en surplomb des guides d'onde, par implantation ionique ou diffusion d'ions à travers les ouvertures d'un troisième masque (MK3); et,

f/ réalisation de contacts ohmiques métalliques (5,50) en surface des zones de type de conductivité $p^+$.

14. Procédé selon la revendication 13, caractérisé en ce qu'entre les étapes b'$_2$) et c') est incluse une étape c$_0$ :

c$_0$) Réalisation d'un masque MK$_5$ couvrant l'ensemble du dispositif à l'exception des extrémités de sortie des guides Gii et/ou G'ii, réalisation en surface de l'extrémité de ces guides d'une couche absorbante (30) pour la longueur d'onde de fonctionnement suivie de l'élimination du masque MK$_5$.

## Claims

1. Optical switching element for selectively directing a light signal received at its input to one or other of its two outputs, said switching element comprising on a monocrystalline semiconductor substrate (1) of a material having a first refractive index $n_0$ a plurality of optical waveguides (G$_{ii}$, H$_{ii}$, H'$_{ii}$, G'$_{ii}$) each comprising a linear strip of semiconductor material have a second refractive index $n_1$ greater than that of the substrate, the dimensions of said guides being such that they each convey a monomode light wave, said plurality comprising:

   – a first or main optical waveguide (G$_{ii}$) formed on the plane top surface of the substrate, said first guide extending linearly from the input to a first or direct output of the switching element,

   – a first optical waveguide section or first secondary guide (H$_{ii}$) extending parallel to the main guide (G$_{ii}$) over a coupling length D and separated from it by a small coupling distance d,

   – a first system of electrodes (E$_{ii}$, M) provided on the main guide/first secondary guide assembly to apply potential or currents for switching light from one guide to the other,

   – a mirror (M$_{ii}$) provided on said first secondary guide (H$_{ii}$) in a region beyond the area of the first electrodes (E$_{ii}$), said mirror comprising a plane lateral surface orthogonal to the plane of the substrate and at 45˚ to the optical axis of said guide,

   – a second or transverse main optical waveguide (G'$_{ii}$) also formed on the plane top surface of said substrate, said transverse main guide extending orthogonally to the main guide (G$_{ii}$) and crossing it beyond said first electrodes (E$_{ii}$) and said transverse main guide being connected by its end opposite the crossover point to the second or transverse output of the switching element,

   – a second optical waveguide section or second secondary guide (H'$_{ii}$) disposed at 90˚ to said first secondary guide (H$_{ii}$) and connected to the latter to receive the light reflected by the mirror (M$_{ii}$), said second secondary guide extending parallel to the transverse main guide (G'$_{ii}$) at a small distance from it equal to said coupling distance d and over a length equal to said coupling length D, and

- a second system of electrodes (E'$_{ii}$, M) provided on the second secondary guide/transverse main guide assembly to apply potentials or currents for switching light from one guide to the other,

    said switching element being characterised in that:

- said first and second secondary guides (H$_{ii}$, H'$_{ii}$) are also formed on the plane top surface of the substrate on one side of the main and transverse main guides facing each other, and

- the guides (G$_{ii}$, H$_{ii}$, H'$_{ii}$, G'$_{ii}$) and the substrate (1) are covered with a planar layer (2) of semiconductor material having a third refractive index n$_2$ less than that of the guides on the plane top surface of which are provided said first and second bias electrodes (E$_{ii}$, E'$_{ii}$) and which comprises an opening (Q$_{ii}$) exposing the structures of the guide as far as the substrate around the mirror (M$_{ii}$)

2. Element according to claim 1 characterised in that the cross-section of the guides (G$_{ii}$, H$_{ii}$, H'$_{ii}$, G'$_{ii}$) is rectangular.

3. Element according to claim 2 characterised in that the substrate (1) is made from an n$^+$ conductivity type A$_{III}$ B$_V$ binary material, in that the strips (3) forming the guides are made from an n$^-$ conductivity type (A$_{III}$ X$_{III}$, B$_V$ Y$_V$) quaternary material, and in that the planar layer (2) is made from an n$^-$ conductivity type (A$_{III}$, B$_V$) binary material or an (A$_{III}$ X$_{III}$, B$_V$ Y$_V$) quaternary material.

4. Element according to claim 2 characterised in that the substrate (10) is made from a semi-insulative (A$_{III}$, B$_V$) binary material, in that the strips forming the guides are obtained by superposing an n$^+$ conductivity type (A$_{III}$, B$_V$) binary material and a layer (3) of an n$^-$ conductivity type (A$_{III}$, X$_{III}$, B$_V$ Y$_V$) quaternary material, in that the planar layer (2) is an n$^-$ conductivity type (A$_{III}$, B$_V$) binary material or (A$_{III}$ X$_{III}$, B$_V$ Y$_V$) quaternary material and in that the n$^+$ layer portions (1') forming the lower layers of the guide are electrically interconnected.

5. Element according to claim 3 or claim 4 characterised in that the system of electrodes comprises an ohmic electrode M (6) connected to earth formed by a metal layer in contact with the n$^+$ conductivity type material (1 or 1') and respective systems E$_{ii}$ and E'$_{ii}$ of four electrodes F$_1$, F$_2$, F$_3$, F$_4$ and F'$_1$, F'$_2$, F'$_3$, F'$_4$

grouped symmetrically, two aligned electrodes F$_1$, F$_2$ or F'$_1$, F'$_2$ on the main guides and two aligned electrodes F$_3$, F$_4$ or F'$_3$, F'$_4$ in face to face relationship on the secondary guides, each formed by superposing a p$^+$ conductivity type well (4) over guides formed in the planar layer (2) and a metal layer (5) forming an ohmic contact on said planar layer (2).

6. Element according to any one of claims 3 to 5 characterised in that the element A is indium (In), the element B phosphorus (P), the element X gallium (Ga) and the element Y arsenic (As).

7. Element according to any one of claims 3 to 6 characterised in that the ohmic contacts on the n$^+$ layer (1, 1') are in the form of Au-Ge-Ni multilayers and in that the ohmic contacts (5) on the p$^+$ layer (4) are in the form of Ti-Pt-Au multilayers.

8. Optical switching matrix comprising a number n of inputs IN$_1$, IN$_2$, ..., IN$_n$, a number n of direct outputs I'$_1$, I'$_2$, ..., I'$_n$ and a number m of transverse outputs O$_1$, O$_2$, ..., O$_m$ between which switching is effected, characterized in that it is formed of n x m switching elements according to any one of claims 1 to 7 juxtaposed bidirectionally so that the main guides and the secondary guides of each element are in respective alignment.

9. Matrix according to claim 8 characterised in that each direct or transverse output main guide is provided directly on its top surface with a light signal detector D in the form of a layer (30) absorbent at the wavelength λ having a refractive index n$_3$ greater than that of the guides, in which absorbent layer (30) is formed a p$^+$ type well (40) on the surface of which an ohmic type contact (50) is formed.

10. Matrix according to claim 9 made up of elements according to any one of claims 3 to 7 characterised in that the absorbent layer (30) is an (A$_{III}$X$_{III}$, B$_V$) material.

11. Matrix according to claim 9 characterised in that the detector ohmic contacts (50) are in the form of Ti-Pt-Au multilayers.

12. Method of fabricating a switching element according to claim 1 comprising at least the following steps:

    a/ forming a monocrystalline semiconductor substrate (1) having a plane face oriented in a crystallographic plane, said substrate being made from an $n^+$ conductivity type $A_{III}$ $B_V$ binary material having a low refractive index $n_0$ at a given operating wavelength $\lambda$,

b/ formation on the surface of the substrate (1) by epitaxial growth of a plane layer (3) of an $n^-$ conductivity type $A_{III}X_{III}$, $B_V$ $Y_V$ quaternary material having a refractive index $n_1 > n_0$ at the wavelength $\lambda$,

c/ etching the quaternary layer (3) using the reactive ion etching (RIE) method until the substrate (1) is etched to a small depth, said etching being carried out using a first mask $(MK_1)$ to retain after such etching in relief on the substrate the strips which form the direct and transverse main guides $(G_{ii}, G'_{ii})$ and the strips which form the secondary guides $(H_{ii}$ and $H'_{ii})$ and to form the mirror $(M_{ii})$ at 45° to the axis of the secondary guides $(H_{ii}$ and $H'_{ii})$ and perpendicular to the plane of the substrate,

d/ epitaxially growing a planarising layer (2) of an $n^-$ conductivity type $A_{III}$ $B_V$ binary material having a low refractive index $n_2 > n_1$ using a second mask $(MK_2)$ to protect an approximately square region $(Q_{ii})$ in which the main guides $(G_{ii}, G'_{ii})$ intersect and containing the mirror $(M_{ii})$ so that the waveguides $(G_{ii}, H_{ii}, G'_{ii}, H'_{ii})$ and the mirrors $(M_{ii})$ have relative position according to claim 1,

e/ to form electrode systems $E_{ii}$, $E'_{ii}$, producing $p^+$ conductivity type areas (40, 4) in the planarising layer over the waveguides by ion implantation or diffusion through the openings of a third mask $(MK_3)$, and

f/ producing metal ohmic contacts (5, 50) on the surface of the $p^+$ conductivity type areas.

13. Method of fabricating a switching element according to claim 4 comprising the following steps:

a'/ forming a monocrystalline substrate (10) having a plane face oriented in a crystallographic plane made from a semi-insulative $A_{III}$ $B_V$ binary material chosen to have a low refractive index $n'_0$ at a wavelength $\lambda$,

b'$_1$/ forming on the surface of the substrate (10) a plane epitaxial layer (1') of the $n^+$ conductivity type $A_{III}$ $B_V$ material having a low refractive index $n_0$ similar to $n'_0$ at the wavelength $\lambda$,

b'$_2$/ forming on the surface of the layer (1') a plane epitaxial layer (3) approximately 0.5 to 1 micrometre thick from an $n^-$ conductivity type material having a refractive index $n_1 > n_0$ or $n'_0$ at the wavelength $\lambda$,

c'/ etching, for example using the reactive ion etching (RIE) technique, the layers (3) and (1') until the lower substrate (10) is etched to a small depth, this etching being carried out using a first mask $(MK'_1)$ delimiting the primary waveguides $(G_{ii}, G'_{ii})$ and the secondary waveguides $(H_{ii}, H'_{ii})$ and the mirrors $(M_{ii})$ at 45° to the optical axis of the guides and perpendicular to the plane of the substrate and enabling portions of the layers ([illegible]) to be retained to form connections in the $n^+$ type conductivity layer (1') between the various parts of the guides,

d/ epitaxially growing an $n^-$ conductivity type $A_{III}$ $B_V$ binary material planarising layer (2) having a low refractive index $n_2 > n_1$ using a second mask $(MK_2)$ to protect an approximately square region $(Q_{ii})$ in which the main guides $(G_{ii}, G'_{ii})$ intersect and containing the mirror $(M_{ii})$ so that the waveguides $(G_{ii}, H_{ii}, G'_{ii}, H'_{ii})$ and the mirrors $(M_{ii})$ have relative positions according to claim 1;

e/ to form systems of electrodes $(E_{ii}, E'_{ii})$ forming $p^+$ conductivity type areas (40, 4) in the planarising layer of the waveguides by ion implantation or diffusion through a third mask $(MK_3)$; and

f/ forming metal ohmic contacts (5, 50) on the surface of the $p^+$ conductivity type areas.

14. Method according to claim 13 characterised in that it includes between steps b'$_2$) and c') a step:

c$_0$) forming a mask $(MK_5)$ covering all of the device except for the exit ends of the guides $G_{ii}$ and/or $G'_{ii}$ and forming on the surface at the end of these guides a layer (30) absorbent at the operating wavelength followed by elimination of the mask $MK_5$.

**Patentansprüche**

1. Optisches Schaltelement, um ein an seinem Eingang empfangenes Lichtsignal selektiv auf einen seiner zwei Ausgänge zu lenken, wobei das Element auf einem monokristallinen Halbleitersubstrat (1) aus einem Material mit einem ersten Brechungsindex $n_0$ mehrere Lichtleiter besitzt (Gii, Hii, H'ii, G'ii), die je von einem geradlinigen Band aus einem Halbleitermaterial mit einem zweiten Brechungsindex $n_1 > n_0$ gebildet werden, wobei die Abmessungen dieser Lichtleiter so gewählt sind, daß sie je eine Monomodewelle transportieren, und wobei folgende Lichtleiter vorgesehen sind:

- ein erster Lichtleiter (Gii), Hauptlichtleiter genannt, der auf der ebenen Oberseite des Substrats hergestellt ist und sich geradlinig vom Eingang bis zu einem ersten Ausgang des Schaltelements, direkter Ausgang genannt, erstreckt,
- ein erster Lichtleiterabschnitt (Hii), erster Sekundärlichtleiter genannt, der sich über eine Länge D, Koppellänge genannt, parallel zum Hauptlichtleiter (Gii) erstreckt und zu diesem einen geringen Abstand d, Koppelabstand genannt, aufrechterhält,
- ein erstes Elektrodensystem (Eii, M), das auf der aus dem Hauptlichtleiter und dem ersten Sekundärlichtleiter gebildeten Einheit angeordnet ist, um Potentiale oder Ströme anzulegen, die die Umschaltung des Lichts von einem auf den anderen dieser Lichtleiter erlauben,
- ein Spiegel (Mii), der auf dem ersten Sekundärlichtleiter (Hii) in einer Zone außerhalb der Zone der ersten Elektroden (Eii) angebracht ist und aus einer ebenen Seitenfläche besteht, die senkrecht zur Ebene des Substrats verläuft und einen Winkel von 45˚ mit der optischen Achse dieses Lichtleiters einschließt,
- ein zweiter Lichtleiter (G'ii), querverlaufender Hauptlichtleiter genannt, der ebenfalls auf der ebenen Oberseite des Substrats ausgebildet ist und sich senkrecht zum Hauptlichtleiter (Gii) erstreckt und diesen außerhalb des Bereichs der ersten Elektroden (Eii) kreuzt, wobei dieser querverlaufende Hauptlichtleiter mit seinem dem Kreuzungspunkt entgegengesetzten Ende an einen zweiten Ausgang des Schaltelements, Querausgang genannt, angeschlossen ist,
- ein zweiter Lichtleiterabschnitt (H'ii), zweiter Sekundärlichtleiter genannt, der mit dem ersten Sekundärlichtleiter (Hii) einen Winkel von 90˚ einschließt und an diesen angeschlossen ist, um das vom Spiegel (Mii) reflektierte Licht zu empfangen, wobei dieser zweite Sekundärlichtleiter sich parallel zum querverlaufenden Hauptlichtleiter (G'ii) in einem geringen Abstand von diesem gleich dem Koppelabstand d und über eine Länge gleich der Koppellänge D erstreckt,
- und ein zweites Elektrodensystem (E'ii, M), das auf der vom zweiten Sekundärlichtleiter und dem querliegenden Hauptlichtleiter gebildeten Einheit liegt, um Potentiale oder Ströme anzulegen, die eine Umschaltung des Lichts von einem zum anderen dieser Lichtleiter erlauben, dadurch gekennzeichnet, daß
- die ersten und zweiten Sekundärlichtleiter (Hii, H'ii) ebenfalls auf der ebenen Oberseite des Substrats auf einer Seite des Hauptlichtleiters und des querliegenden Hauptlichtleiters liegen und einander gegenüberliegen,
- und die Lichtleiter (Gii, Hii, H'ii, G'ii) und das Substrat (1) von einer Planarschicht (2) aus einem Halbleitermaterial mit einem dritten Brechungsindex $n_2 < n_1$ bedeckt sind, wobei auf der ebenen Oberseite dieser Planarschicht die ersten und zweiten Elektroden (Eii, E'ii) für die Vorspannung angebracht sind und diese Planarschicht eine Öffnung (Qii) besitzt, die die Strukturen der Lichtleiter bis zum Substrat im Umkreis des Spiegels (Mii) freilegt.

2. Element nach Anspruch 1, dadurch gekennzeichnet, daß der Querschnitt der Lichtleiter (Gii, Hii, H'ii, G'ii) rechteckig ist.

3. Element nach Anspruch 2, dadurch gekennzeichnet, daß das Substrat (1) aus einem binären Material $A_{III}B_V$ mit einer Leitfähigkeit vom Typ $n^+$ besteht, daß die die Lichtleiter bildenden Bänder (3) aus einem quaternären Material $(A_{III}X_{III}, B_V, Y_V)$ mit einer Leitfähigkeit des Typs $n^-$ bestehen, daß die Planarschicht (2) aus einem Material besteht, das aus einem binären Material $(A_{III}, B_V)$ und einem quaternären Material $(A_{III}, X_{III}, B_V, Y_V)$ mit einer Leitfähigkeit des Typs $n^-$ ausgewählt ist.

4. Element nach Anspruch 2, dadurch gekennzeichnet, daß das Substrat (10) aus einem binären halbisolierenden Material $(A_{III}, B_V)$ besteht, daß die die Lichtleiter bildenden Bänder aus der Überlagerung einer Schicht (1') des binären Materials $(A_{III}, B_V)$ mit einer Leitfähigkeit vom Typ $n^+$ und einer Schicht (3) aus einem quaternären Material $(A_{III}, X_{III}, B_V, Y_V)$ mit einer Leitfähigkeit des Typs $n^-$ bestehen und daß die Planarschicht (2) aus einem Material besteht, das aus einem binären Material $(A_{III}, B_V)$ und einem quaternären Material $(A_{III}, X_{III}, B_V, Y_V)$ einer Leitfähigkeit des Typs $n^-$ ausgewählt wird und daß die Bereiche der Schicht (1') des Leitfähigkeitstyps $n^+$, die die Schichten unter den Lichtleitern bilden, elektrisch miteinander verbunden sind.

5. Element nach einem der Ansprüche 3 und 4, dadurch gekennzeichnet, daß das Elektroden system einerseits von einer Elektrode M (6) vom ohm'schen Typ, die an Masse ange schlossen ist und aus einer Metallschicht in Kontakt mit dem Material des Leitfähigkeits typs $n^+$ (1 oder 1') besteht, und andererseits von Systemen $E_{ii}$ und $E'_{ii}$ von je vier Elektro den $F_1$, $F_2$, $F_3$, $F_4$ bzw. $F'_1$, $F'_2$, $F'_3$, $F'_4$ gebildet wird, die symmetrisch angeordnet sind, wobei jeweils zwei Elektroden $F_1$, $F_2$ oder $F'_1$ und $F'_2$ miteinander in Flucht auf dem Hauptlichtleiter und zwei Elektroden $F_3$, $F_4$ oder $F'_3$, $F'_4$ in Flucht miteinander und einan der gegenüberliegend auf dem Sekundär lichtleiter symmetrisch gruppiert sind und wo bei jede Elektrode aus der Überlagerung einer Kassette (4) des Leitfähigkeitstyps $p^+$ in der Planarschicht (2) oberhalb der Lichtleiter und einer Metallschicht (5) gebildet wird, die einen ohm'schen Kontakt auf dieser Planarschicht (2) darstellt.

6. Element nach einem der Ansprüche 3 bis 5, dadurch gekennzeichnet, daß das Element A Indium (In), das Element B Phosphor (P), das Element X Gallium (Ga) und das Element Y Arsen (As) ist.

7. Element nach einem der Ansprüche 3 bis 6, dadurch gekennzeichnet, daß die ohm'schen Kontakte auf der Schicht (1, 1') des Leitfähig keitstyps $n^+$ aus einer Mehrfachschicht von Au – Ge – Ni bestehen und daß die ohm'schen Kontakte (5) auf der Schicht (4) des Leitfähig keitstyps $p^+$ aus einer Mehrfachschicht Ti – Pt – Au bestehen.

8. Optische Schaltmatrix mit n Eingängen $IN_1$, $IN_2$, ...$IN_n$, n direkten Ausgängen $I'_1$, $I'_2$,... $I'_n$ und m Querausgängen $O_1$, $O_2$, ... $O_m$, zwi schen denen die Umschaltung erfolgt, dadurch gekennzeichnet, daß sie aus n x m Schaltele menten gemäß einem der Ansprüche 1 bis 7 besteht, die in zwei Richtungen so aneinander angefügt sind, daß die Hauptlichtleiter bzw. die Sekundärlichtleiter jedes Elements miteinander in Flucht liegen.

9. Matrix nach Anspruch 8, dadurch gekenn zeichnet, daß jeder Hauptlichtleiter am Direkt ausgang oder am Querausgang unmittelbar an seiner Oberseite einen Lichtsignaldetektor D trägt, der von einer absorbierenden Schicht (30) für die Wellenlänge $\lambda$ mit einem Bre chungsindex $n_3 > n_1$ besteht, wobei in der absorbierenden Schicht (30) eine Kassette (40) des Leitfähigkeitstyps $p^+$ eingelassen ist, an deren Oberfläche ein ohm'scher Kontakt (50) hergestellt wird.

10. Matrix nach Anspruch 9, die, sofern sie aus Elementen nach einem der Ansprüche 3 bis 7 hergestellt ist, dadurch gekennzeichnet ist, daß die absorbierende Schicht (30) aus einem Material ($A_{III}$, $X_{III}$, $B_V$) besteht.

11. Matrix nach Anspruch 9, dadurch gekenn zeichnet, daß die ohm'schen Kontakte (50) der Detektoren aus Mehrfachschichten Ti – Pt – Au bestehen.

12. Verfahren zur Herstellung eines Schaltele ments nach Anspruch 1, das mindestens die folgenden Verfahrensschritte aufweist:
a/ Bildung eines monokristallinen Halblei tersubstrats (1) mit einer gemäß einer kri stallographischen Ebene ausgerichteten ebenen Seite, wobei dieses Substrat aus einem binären Material $A_{III}B_V$ eines niedri gen Brechungsindex $n_0$ für eine gegebene Nutzwellenlänge $\lambda$ und einer Leitfähigkeit des Typs $n^+$ besteht,
b/ Bildung einer ebenen Schicht (3) aus einem quaternären Material $A_{III}X_{III}B_VY_V$ mit einem Brechungsindex $n_1 > n_0$ bei der Wel lenlänge $\lambda$ und einem Leitfähigkeitstyp $n^-$ auf der Oberfläche des Substrats durch epitaxiales Wachstum,
c/ Abätzen der quaternären Schicht (3) bis in eine geringe Tiefe des Substrats (1) hin ein, mit Hilfe der reaktiven Ionenätzmethode (RIE), wobei dieses Abätzen mit Hilfe einer ersten Maske $MK_1$ erfolgt, die es ermög licht, nach dem Ätzen reliefartig auf dem Substrat Bänder zu erhalten, die die direk ten und quer verlaufenden Hauptlichtleiter (Gii, G'ii) sowie die Sekundärlichtleiter bil den (Hii und H'ii), und wobei durch dieses Ätzen der Spiegel (Mii) in einem Winkel von 45° zu den Achsen der Sekundärlichtleiter (Hii und H'ii) und senkrecht zur Ebene des Substrats entsteht,
d/ Herstellung einer Planarschicht (2) aus einem binären Material $A_{III}B_V$ mit einem geringen Brechungsindex $n_2 < n_1$ und einer Leitfähigkeit vom Typ $n^-$ durch epitaxiales Wachstum, wobei durch eine zweite Maske ($MK_2$) eine angenähert quadratische Zone (Qii) entsprechend der Schnittzone der sich kreuzenden Hauptlichtleiter (Gii, G'ii) und der Zone des Spiegels (Mii) so geschützt wird, daß die Lichtleiter (Gii, Hii, G'ii, H'ii) und der Spiegel (Mii) die relativen Positio nen gemäß Anspruch 1 einnehmen,

e/ Herstellung von Zonen (40, 4) eines Leitfähigkeitstyps $p^+$ in der Planarschicht oberhalb der Lichtleiter durch Ionenimplantation oder Ionendiffusion durch die Öffnungen in einer dritten Maske $MK_3$, zur Ausbildung der Elektrodensysteme Eii, E'ii, und

f/ Herstellung von metallischen ohm'schen Kontakten (5, 50) auf der Oberfläche der Zonen mit der Leitfähigkeit $p^+$.

13. Verfahren zur Herstellung eines Schaltelements nach Anspruch 4, das die folgenden Verfahrensschritte aufweist:

a'/ Bildung eines monokristallinen Substrats (10) mit einer gemäß einer kristallographischen Ebene ausgerichteten ebenen Seite aus einem Binärmaterial $A_{III}B_V$, das einen niedrigen Brechungsindex $n'_0$ für eine Wellenlänge $\lambda$ besitzt und halbisolierend ist,

b'1/ Bildung einer epitaxialen ebenen Schicht (1') eines Materials $A_{III}B_V$ mit einer Leitfähigkeit $n^+$ und einem geringen Brechungsindex $n_0 \approx n'_0$ für die Wellenlänge $\lambda$ auf der Oberfläche des Substrats (10),

b'2/ Bildung einer epitaxialen ebenen Schicht (3) eines Materials mit einer Leitfähigkeit $n^-$ und einem Brechungsindex $n_1 > n_0$ oder $n_1 > n'_0$ für die Wellenlänge $\lambda$ auf der Oberfläche der Schicht (1'),

c'/ Abätzen der Schichten (3) und (1'), beispielsweise durch reaktives Ionenätzen RIE, bis zum Anätzen des Substrats (10) über eine geringe Tiefe, wobei dieses Abätzen gemäß einer ersten Maske $MK'_1$ erfolgt, die die Hauptlichtleiter (Gii, G'ii) und die Sekundärlichtleiter (Hii, H'ii) und den Spiegel (Mii) mit 45° zur optischen Achse der Lichtleiter und senkrecht zur Ebene des Substrats begrenzt und es ermöglicht, Bereiche der Schichten (1', 3) freizuhalten, um Verbindungen in der Schicht (1') des Leitfähigkeitstyps $n^+$ zwischen den verschiedenen Teilen der Lichtleiter herzustellen,

d/ Herstellung einer Planarschicht (2) aus einem Binärmaterial $A_{III}B_V$ mit einem Brechungsindex $n_2 < n_1$ und einer Leitfähigkeit vom Typ $n^-$ durch epitaxiales Wachstum, indem mit einer zweiten Maske ($MK_2$) eine annähernd quadratische Zone Qii entsprechend der Kreuzungszone der Hauptlichtleiter (Gii, G'ii) und der Zone des Spiegels (Mii) geschützt wird, so daß die Lichtleiter (Gii, Hii, G'ii, H'ii) und der Spiegel (Mii) die relativen Stellungen gemäß Anspruch 1 aufweisen,

e/ Herstellung von Zonen (40, 4) des Leitfähigkeitstyps $p^+$ in der Planarschicht oberhalb der Lichtleiter durch Ionenimplantation oder Ionendiffusion durch die Öffnungen in einer dritten Maske ($MK_3$) hindurch, um Elektrodensysteme Eii, E'ii zu bilden, und

f/ Herstellung von ohm'schen Metallkontakten (5, 50) auf der Oberfläche der Zonen des Leitfähigkeitstyps $p^+$.

14. Verfahren nach Anspruch 13, dadurch gekennzeichnet, daß zwischen den Verfahrensschritten b'2/ und c'/ ein Verfahrensschritt $c_0$/ eingefügt ist, nämlich:

$c_0$/ die Herstellung einer Maske $MK_5$, die die gesamte Vorrichtung mit Ausnahme der Ausgangsenden der Lichtleiter Gii und/oder G'ii bedeckt, und die Herstellung einer bei der Betriebswellenlänge absorbierenden Schicht (30) auf der Oberfläche dieser Enden, worauf die Maske $MK_5$ entfernt wird.

FIG.1

FIG. 2

FIG. 3a

$A_{III}$ $B_{V}$ $n^{+}$     1 ($n_0$)

FIG. 3b

$(A_{III}\ X_{III},\ B_{V}\ Y_{V})$   $n^{-}$     3 ($n_1 > n_0$)

$A_{III}$ $B_{V}$   $n^{+}$     1 ($n_0$)

FIG. 3c

$G_{ii}$     $H_{ii}$

$n^{-}$    $n^{-}$     3 ($n_1 > n_0$)

$n^{+}$     1 ($n_0$)

FIG. 3d

$MK_1$

$G'_{ii}$

$H'_{ii}$

$G_{ii}$     $H_{ii}$

FIG. 3f

FIG. 3e

FIG. 3h

FIG. 3g

FIG. 3i

FIG. 3 j

FIG. 3 k

FIG. 3 l

21

$A_{III}$ $B_{V}$ S.I. — 10 ($n'_0$)

**FIG. 4a**

$A_{III}$ $B_{V}$ $n^+$ — 1' ($n_0$)

$A_{III}$ $B_{V}$ S.I. — 10 ($n'_0$)

**FIG. 4b**

($A_{III}$ $X_{III}$ , $B_{V}$ $Y_{V}$) $n^-$ — 3 ($n_1$)

$A_{III}$ $B_{V}$ $n^+$ — 1' ($n_0$)

$A_{III}$ $B_{V}$ S.I. — 10 ($n'_0$)

**FIG. 4c**

3 ($n_1$)

1' ($n_0$)

$A_{III}$ $B_{V}$ S.I. — 10 ($n'_0$)

**FIG. 4d**

22

G_{ii}   H_{ii}

3

1'

10

## FIG.4e

MK_2

G'_{ii}

14

H'_{ii}

I — — — I

↕ w

w

## FIG.4f

MK'_1   G_{ii}   15   H_{ii}

FIG. 5a

FIG. 5b

FIG. 6a

FIG. 6b